# FASCICULE DE BREVET EUROPEEN

(11) **EP 2 704 615 B1**
(45) Date de publication et mention de la délivrance du brevet: **16.12.2015**
(21) Numéro de dépôt: 12724683.3
(22) Date de dépôt: 23.04.2012
(51) Int. Cl.: A47J 31/46

(54) **ACCESSOIRE VERSEUR POUR MACHINE DE DISTRIBUTION DE BOISSON**
AUSGIESSZUBEHÖR FÜR EINEN GETRÄNKEAUTOMAT
POURING ACCESSORY FOR BEVERAGE-DISPENSING MACHINE

(30) Priorité: 03.05.2011 FR 1153748
(43) Date de publication de la demande: 12.03.2014
(73) Titulaire: Pachy, Stéphane, 59130 Lambersart (FR)
(72) Inventeur: Pachy, Stéphane, 59130 Lambersart (FR)
(74) Mandataire: Matkowska, Franck
(86) Numéro de dépôt international: PCT/FR2012/050886
(87) Numéro de publication internationale: WO 2012/150398

(56) Documents cités:
- WO-A2-2008/052946
- WO-A2-2011/048485
- US-A- 5 123 458
- US-A- 5 309 960

## Description

### Domaine technique

La présente invention concerne un nouvel accessoire verseur pour machine de distribution de boisson, et plus particulièrement pour machine de fabrication et distribution de boisson du type machine «expresso». La boisson peut être tout liquide comestible chaud ou froid, tel que par exemple du café, du chocolat, du thé, ...

### Art antérieur

Les machines de distribution de boisson, et plus particulièrement les machines dites «machines expresso » sont à présent largement utilisées dans les foyers ou dans les collectivités pour la fabrication et la distribution de boissons chaudes, telles que principalement du café, mais également telles que du thé ou du chocolat.

Généralement ce type de machine est conçu pour délivrer à chaque utilisation un volume (dose) de boisson prédéfini et le cas échéant paramétrable, et comporte une buse de distribution par laquelle ce volume prédéfini de boisson est évacué et tombe dans une tasse ou dans un verre positionné sous la sortie de la buse.

Afin de permettre la répartition de ce volume de boisson prédéfini simultanément dans deux tasses ou dans deux verres, il est connu à ce jour de fixer, de manière amovible, un accessoire verseur en forme de croissant et à double sortie, sur la sortie de la buse de distribution. Ce type d'accessoire verseur est décrit par exemple dans le brevet US 5 309 960 ou dans la demande de brevet internationale WO 94/23623 (figures 2 et 7). Le brevet US 5 123 458 décrit également le montage de ce type d'accessoire verseur à double sortie sur la buse distribution d'une pompe à bière ou équivalent.

Un inconvénient majeur de ce type d'accessoire verseur est qu'il est adapté spécifiquement pour être monté sur un modèle donné de machine, et ne peut pas être monté sur un autre modèle de machine dont la buse de sortie serait différente de celle pour laquelle l'accessoire verseur a été spécifiquement conçu.

### Objectif de l'invention

La présente invention vise à proposer un nouvel accessoire verseur à au moins deux sorties, qui peut avantageusement être mis en oeuvre avec des machines de distribution de boisson dont les buses de distribution de boisson peuvent être différentes, et qui n'est pas adapté uniquement à un seul modèle de machines de distribution de boisson.

### Résumé de l'invention

Cet objectif est atteint par l'accessoire verseur présentant les caractéristiques techniques suivantes. Cet accessoire comporte un pied supportant un réceptacle, ledit réceptacle délimitant au moins un volume intérieur et comportant une ouverture supérieure pour le remplissage dudit volume intérieur du réceptacle ; ledit réceptacle est en outre pourvu d'au moins deux becs verseurs externes, qui communiquent avec le volume intérieur du réceptacle ; le réceptacle et les becs verseurs sont conçus de manière à permettre l'écoulement par gravité vers l'extérieur du réceptacle simultanément par les becs verseurs d'un liquide contenu dans le volume intérieur du réceptacle, et de préférence de la totalité d'un liquide contenu dans le volume intérieur du réceptacle.

Plus particulièrement, mais de manière facultative selon l'invention, l'accessoire de l'invention comporte les caractéristiques techniques additionnelles et optionnelles ci-après, prises isolément ou en combinaison :
- le pied comporte un élément support de forme allongée, et une embase à l'extrémité inférieure de l'élément support ;
- l'élément support présente une dimension transversale (d₁) inférieure à la dimension transversale (D) du réceptacle ;
- la dimension transversale (d₂) de l'embase est supérieure à la dimension transversale (D) du réceptacle ;
- l'embase comporte un évidement à l'aplomb de chaque bec verseur ;
- la dimension transversale (d₂) l'embase est inférieure ou égale à la dimension transversale (d₄) de l'ensemble constitué par le réceptacle et les becs verseurs ;
- l'embase forme un plateau de dimension transversale (d₃) supérieure à la dimension transversale (d₄) de l'ensemble constitué par le réceptacle et les becs verseurs ;
- le réceptacle comporte un fond et une paroi latérale entourant le fond et délimitant avec ledit fond ledit volume intérieur ;
- le bord supérieur de la paroi latérale délimite ladite ouverture supérieure ;
- chaque bec verseur externe communique avec le volume intérieur du réceptacle à travers la paroi latérale du réceptacle.
- le réceptacle comporte pour chaque bec verseur une ouverture d'évacuation qui permet de faire communiquer le volume intérieur du réceptacle avec un bec verseur et qui est située au niveau de la jonction entre le fond et la paroi latérale du réceptacle ;
- la face supérieure du fond du réceptacle permet l'écoulement par gravité d'un liquide jusqu'aux becs verseurs ;
- le réceptacle et les becs verseurs sont conçus pour permettre l'écoulement par gravité en en dehors du réceptacle d'une dose de boisson sous forme de sous-doses ayant sensiblement le même volume ;
- chaque bec verseur est courbé vers le bas ;
- la sortie de chaque bec verseur est positionnée à un niveau au dessous du fond du réceptacle ;
- l'accessoire comporte deux becs verseurs diamétralement opposés par rapport au volume intérieur du réceptacle ;
- le pied est réglable en hauteur ;
- le réceptacle et les becs verseurs externes sont conçus de manière à permettre l'écoulement par gravité vers l'extérieur du réceptacle simultanément par les becs verseurs d'un liquide contenu dans le volume intérieur du réceptacle, lorsque le pied de l'accessoire verseur est posé sur un support plan horizontal.

L'invention a également pour objet une machine de distribution de boisson et un accessoire susvisé, ladite machine comportant au moins une buse de distribution d'une boisson, et l'accessoire étant adapté pour être positionné de manière stable sous la buse sans être fixé à la buse de distribution.

L'invention a pour autre objet l'utilisation d'une machine comportant au moins une buse de distribution d'une boisson, et permettant à chaque utilisation de délivrer une dose prédéfinie de boisson, en combinaison avec un accessoire susvisé, de manière à distribuer une sous-dose de boisson par bec verseur à partir de la dose de boisson délivrée par la machine.

### Brève description des figures

D'autres caractéristiques et avantages de l'invention apparaîtront plus clairement à la lecture de la description détaillée ci-après de plusieurs variantes de réalisation d'un accessoire verseur, laquelle description détaillée est donnée à titre d'exemple non limitatif et non exhaustif de l'invention et en référence aux dessins annexés sur lesquels :
- La figure 1 est une représentation en vue de côté d'un accessoire verseur conforme à une première variante de réalisation de l'invention.
- La figure 2 est une représentation en vue de côté de l'accessoire verseur de la figure 1 dans un plan perpendiculaire à celui de la figure 1.
- La figure 3 est une représentation, en vue de dessus, de l'accessoire verseur de la figure 1.
- La figure 4 est une représentation, en vue de face, d'une machine de distribution de boisson, de type « machine à café expresso», de l'accessoire des figures 1 à 3 positionné par rapport à la machine, et de deux tasses en cours de remplissage au moyen dudit accessoire.
- La figure 5 une représentation en perspective de deux tasses et d'un accessoire verseur conforme à une deuxième variante de réalisation de l'invention.
- La figure 6 une représentation, en vue de côté, d'un accessoire verseur conforme à une troisième variante de réalisation de l'invention.
- La figure 7 une représentation, en vue de côté, d'un accessoire verseur conforme à une quatrième variante de réalisation de l'invention.
- La figure 8 représente une cinquième variante de réalisation d'un accessoire verseur de l'invention.

### Description détaillée

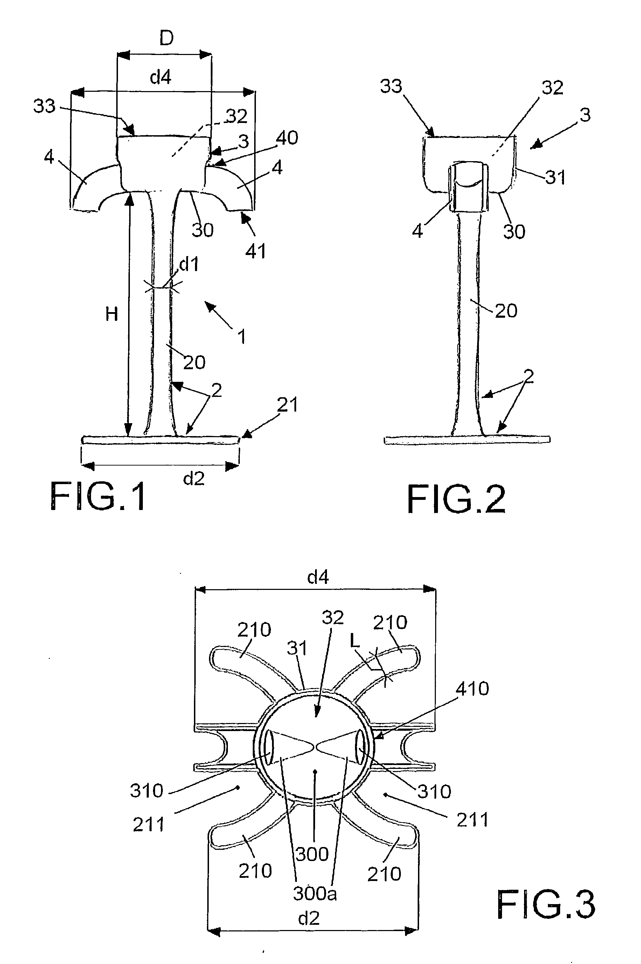

En référence aux figures 1 à 3, dans une première variante de réalisation, l'accessoire verseur 1 comporte un pied 2 supportant un réceptacle 3 pourvu de deux becs verseurs 4 externes.

Plus particulièrement, le réceptacle 3 comporte un fond 30 et une paroi latérale 31 entourant le fond 30 et délimitant avec ledit fond 30 un volume intérieur 32. Cette paroi latérale 31 délimite en outre, au niveau de son bord supérieur, une ouverture supérieure 33 de grande dimension, pour le remplissage du volume intérieur 32 du réceptacle avec un volume prédéfini d'une boisson.

Dans les variantes des figures annexées, la section transversale du réceptacle 3 dans un plan horizontal est sensiblement circulaire. Plus généralement, la géométrie de la section transversale du réceptacle 3 dans un plan horizontal est sans importance pour l'invention et peut ne pas être circulaire. Par exemple la géométrie de la section transversale du réceptacle 3 dans un plan horizontal peut être polygonale.

Le pied 2 est adapté pour poser de manière stable l'accessoire 1 sur un support plan. Dans la variante particulière des figures 1 à 3, il comporte un élément support 20 de forme allongée, de hauteur H, et une embase 21 à l'extrémité inférieure de l'élément support 20. L'extrémité supérieure de cet élément support 20 est fixée au fond 30 du réceptacle ou est prolongée par ledit fond 30.

Plus particulièrement, l'élément support 20 présente une faible dimension transversale d₁ (figure 1) par rapport à la dimension transversale D du réceptacle 3 de manière à ménager un espace libre à l'aplomb et au dessous des deux becs verseurs 4, afin de faciliter le positionnement de tasses, verres ou équivalents sous les deux becs verseurs 4.

La dimension transversale d₂ de l'embase 21 (figure 1) est de préférence supérieure à la dimension transversale D du réceptacle 3, de manière à favoriser la stabilité de l'accessoire 1 lorsque celui-ci est posé sur un support plan.

Plus particulièrement, dans la variante de la figure 3, l'embase 21 est constituée de quatre éléments plats courbes 210 de faible largeur L permettant de former une embase 21 stable et sans matière (figure 3 / évidements 211) à l'aplomb des deux becs verseurs 4, ce qui permet le positionnement de tasses, verres ou équivalents sous les deux becs verseurs 4 en posant directement lesdites tasses, verres ou équivalents sur le support plan sur lequel est posé l'accessoire 1.

Plus particulièrement, dans la variante de la figure 3, la dimension transversale d₂ de l'embase 21 est inférieure ou égale à la dimension transversale d₄ de l'ensemble constitué par le réceptacle 3 et les becs verseurs 4, ce qui limite l'encombrement de l'accessoire.

Chaque bec verseur 4 communique à travers la paroi latérale 31 du réceptacle 3 avec le volume intérieur 32 du réceptacle 3, et permet l'écoulement par gravité vers l'extérieur du réceptacle de la totalité d'un liquide contenu dans le volume intérieur du réceptacle. Dans une autre variante de réalisation, les becs verseurs 4 peuvent également communiquer avec le volume intérieur 32 du réceptacle 3 à travers essentiellement ou exclusivement le fond 30 du réceptacle 3.

Plus particulièrement, au niveau de chaque bec verseur 4, la paroi latérale 31 comporte une ouverture d'évacuation 310 qui permet l'écoulement par gravité d'un liquide, contenu dans le volume intérieur 32 du réceptacle 2, dans la partie proximale 40 du bec verseur 4 correspondant. Plus particulièrement, dans cette variante de réalisation, afin de permettre une vidange complète par gravité du réceptacle 3, l'ouverture d'évacuation 310 qui permet de faire communiquer le volume intérieur 32 du réceptacle 3 avec un bec verseur 4 est située au niveau de la jonction entre le fond 30 et la paroi latérale 31 du réceptacle 3.

Plus particulièrement afin de faciliter l'écoulement par gravité d'un liquide vers les becs verseurs 4, le fond 30 présente de préférence une face supérieure 300 ( figure 3 - face supérieure 300 destinée à être au contact du liquide) dans laquelle sont creusées des rigoles 300a permettant l'écoulement par gravité d'un liquide jusqu'aux ouvertures d'évacuation 310 de la paroi latérale 31, c'est-à-dire jusqu'aux becs verseurs 4. Dans une autre variante, la face supérieure 300 du fond 30 peut également être convexe en forme de dôme bombé vers le haut afin de permettre en tout point de sa surface l'écoulement par gravité d'un liquide en direction de la paroi latérale 31, et la partie périphérique de la face supérieure 300 du fond 30 à la jonction avec la paroi latérale 31 peut être conçue de manière à permettre en tout point de la périphérie du fond 30 l'écoulement par gravité d'un liquide jusqu'aux ouvertures d'évacuation 310 de la paroi latérale 31, c'est-à-dire jusqu'aux becs verseurs 4.

Chaque bec verseur 4 présente une forme adaptée pour permettre l'écoulement par gravité d'un liquide introduit dans sa partie proximale 40 jusqu'à son extrémité distale 41 libre, laquelle extrémité distale libre 41 (sortie d'un bec verseur) est positionnée à un niveau au dessous du fond 30 du réceptacle et permet l'écoulement libre de ce liquide par gravité en dehors du bec verseur 4.

L'accessoire 1 peut être formé d'une seule pièce monobloc ou être constitué par l'assemblage de deux ou plusieurs éléments ensemble. La matière constitutive des différentes parties de l'accessoire est sans importance pour l'invention. L'accessoire peut par exemple être en tout ou partie en plastique ou en métal. Les différentes parties de l'accessoire peuvent être réalisées dans des matières différentes.

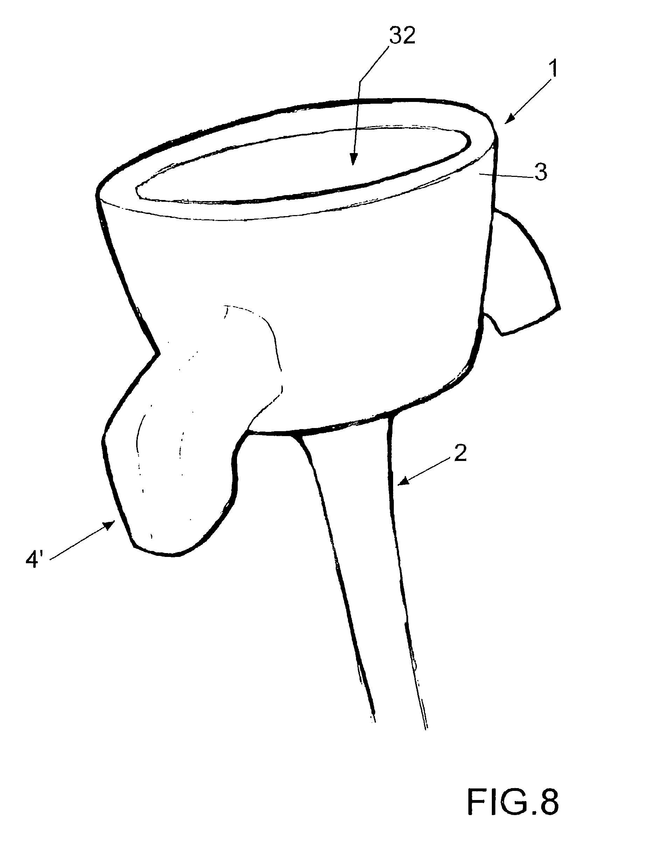

Dans la variante particulière des figures 1 à 3, chaque bec verseur 4 est constitué par un élément en forme de gouttière, ouvert en partie supérieure et courbé vers le bas. Cette structure particulière de bec verseur n'est toutefois pas limitative de l'invention. A titre d'exemple, dans une autre variante illustrée sur la figure 8, l'accessoire peut comporter des becs verseurs 4' qui sont constitués par des éléments tubulaires courbés vers le bas.

Dans les variantes de réalisation particulières des figures annexées, l'accessoire comporte deux becs verseurs 4 ou 4' diamétralement opposés par rapport au volume intérieur 32 du réceptacle 3. Dans une autre variante, l'accessoire pourrait comporter plus de deux becs verseurs et/ou les becs verseurs ne sont pas nécessairement diamétralement opposés.

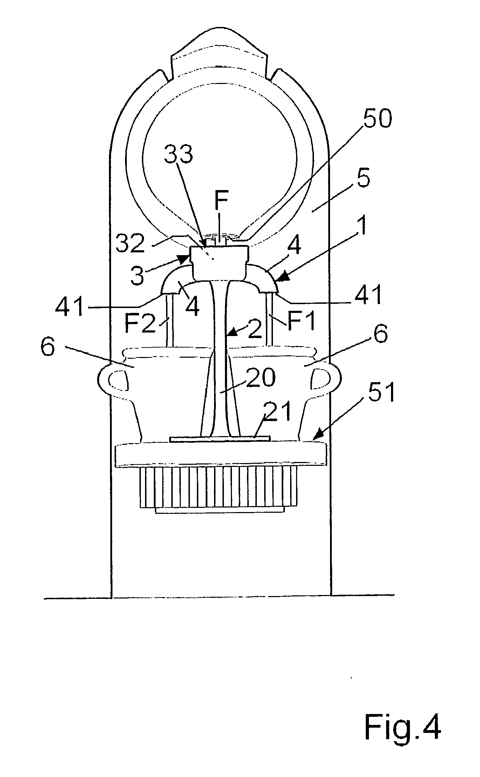

En référence à la figure 4, on a représenté l'accessoire 1 des figures 1 à 3 positionné par rapport à une machine 5 de fabrication et de distribution de boisson, de type machine « expresso ». Cette machine 5 comporte une buse 50 pour la distribution d'une dose de boisson et une tablette 51 formant un support plan sensiblement horizontal.

Pour utiliser l'accessoire 1 avec cette machine 5, l'utilisateur pose l'accessoire 1, par l'intermédiaire de son embase 21, sur la tablette 51, de telle sorte que l'ouverture supérieure 33 du réceptacle 3 soit positionnée à l'aplomb de la sortie de la buse 50. Selon le cas, pour une hauteur totale donnée de l'accessoire et en fonction de la distance séparant la sortie de la buse 50 et la tablette 51, la sortie de la buse 50 peut être située à l'intérieur du volume intérieur 32 du réceptacle 3 ou être située à l'extérieur dudit volume intérieur 32 (cas de la figure 4).

Dans l'invention, l'accessoire verseur n'étant pas monté sur la buse de distribution de la machine, un même accessoire verseur peut avantageusement être mis en oeuvre avec des machines différentes présentant des buses 50 de géométries et/ou de dimensions différentes et/ou avec des machines différentes dont les distances séparant la sortie de la buse 50 et la tablette 51 sont différentes.

En outre, la mise en oeuvre d'une ouverture supérieure 33 de grande dimension pour le réceptacle 3 permet une plus grande flexibilité dans le positionnement latéral de l'accessoire verseur par rapport à la buse 50, celle-ci n'étant pas nécessairement centrée sur l'ouverture 33 du réceptacle 3 comme dans le cas de la figure 4.

Une fois l'accessoire verseur 1 positionné sur la tablette 51, l'utilisateur pose deux tasses 6 ou équivalents sur la tablette 51, en les positionnant chacune au dessous de la sortie 41 d'un bec verseur 4.

Ensuite, l'utilisateur actionne la machine 5 de manière à ce que celle-ci délivre une dose prédéfinie, le cas échéant paramétrable, d'une boisson.
Dans le cadre de l'invention, et en fonction du type de machine 5, la boisson peut être tout liquide chaud (café, thé, chocolat,...), ou tout liquide refroidi ou à température ambiante (jus de fruit, bière, ...). La machine 5 peut être conçue pour fabriquer la boisson in situ ou être conçue simplement pour distribuer la boisson déjà constituée et stockée dans un réservoir de la machine.

La dose de boisson qui est délivrée par la buse 50 (colonne de liquide F de la figure 4) tombe par gravité dans le volume intérieur 32 du réceptacle 3. Cette dose de boisson s'écoule ensuite par gravité à la surface du fond 30 du réceptacle 3 jusqu'aux becs verseurs 4, puis s'écoule dans sa totalité par gravité simultanément dans les becs verseurs 4 jusqu'à leurs sorties respectives 41 en se séparant en deux sous-doses de boisson ayant de préférence des volumes sensiblement identiques. Chaque sous-dose de boisson (colonnes de liquides F1 et F2 de la figure 4) est ensuite réceptionnée dans l'une des tasses 6. En final, le réceptacle 3 de l'accessoire est complètement vide et prêt pour une autre utilisation.

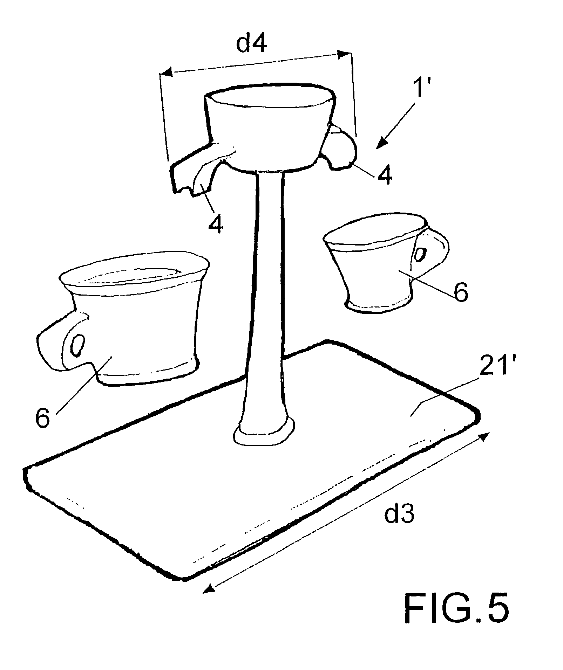

On a représenté sur la figure 5, une autre variante de réalisation d'un accessoire verseur 1' de l'invention, qui se différencie de l'accessoire 1 des figures 1 à 3, par une embase 21' formant un plateau sur lequel des tasses 6 ou équivalents peuvent être posées. Dans cette variante, l'embase 21' en forme de plateau présente une dimension transversale d₃ supérieure à la dimension transversale d₄ de l'ensemble constitué par le réceptacle 3 et les becs verseurs 4.

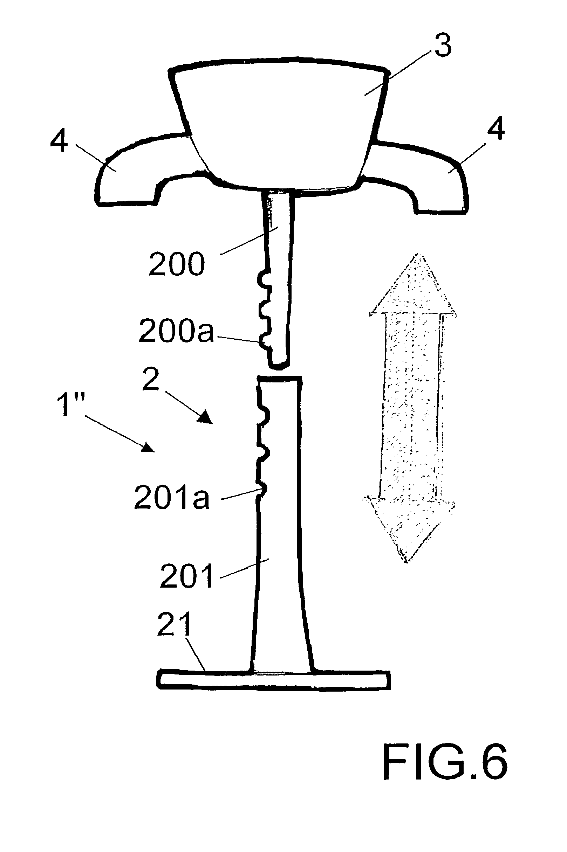

On a représenté sur la figure 6 une autre variante de réalisation d'un accessoire verseur 1" de l'invention, qui se différencie de l'accessoire 1 des figures 1 à 4, principalement par la mise en oeuvre d'un pied support 2 à hauteur réglable. Plus particulièrement dans cette réalisation, le pied support comprend deux parties 200 et 201 pouvant être emboîtées l'une dans l'autre avec n hauteurs de réglage différentes ( n est égal 3 dans le cas particulier de la figure 6), grâce à la mise en oeuvre de n ouvertures 201 a dans la partie 201 qui sont aptes à coopérer avec respectivement n ergots de blocage 200a élastiquement rétractables et permettant le blocage en hauteur de la partie 200 du pied par rapport à la partie 201.

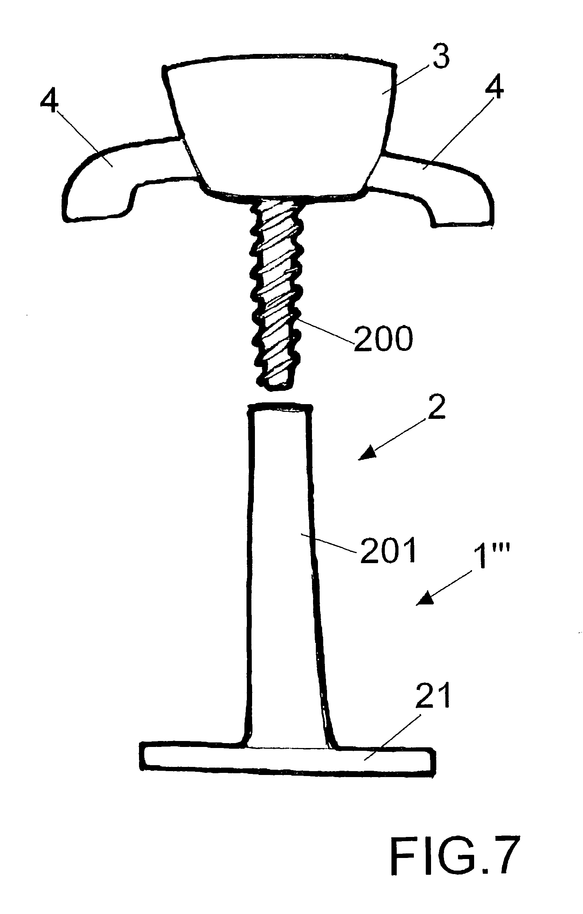

On a représenté sur la figure 7 une autre variante de réalisation d'un accessoire verseur 1"' de l'invention, qui met également en oeuvre un pied support 2 à hauteur réglable, et qui se différencie de l'accessoire 1" de la figure 6 par la mise en oeuvre de deux parties 200 et 201 filetées de manière à pouvoir être emboitées et vissées l'une 200 dans l'autre 201 et permettre un réglage continu de la hauteur du pied support 2.

Les variantes des figures 6 et 7 permettent une plus grande flexibilité d'adaptation de l'accessoire verseur à différentes hauteurs de machine 5.

## Revendications

1. Accessoire verseur (1 ; 1' ; 1" ; 1"') pour machine (5) de distribution d'une boisson, ledit accessoire verseur comportant un pied (2) supportant un réceptacle (3), ledit réceptacle délimitant au moins un volume intérieur (32) et comportant une ouverture supérieure (33) pour le remplissage dudit volume intérieur du réceptacle, ledit réceptacle étant en outre pourvu d'au moins deux becs verseurs (4 ou 4') externes, qui communiquent avec le volume intérieur (32) du réceptacle, et le réceptacle (3) et les becs verseurs (4 ou 4') externes étant conçus de manière à permettre l'écoulement par gravité vers l'extérieur du réceptacle simultanément par les becs verseurs (4 ou 4') d'un liquide contenu dans le volume intérieur (32) du réceptacle.

2. Accessoire verseur (1 ; 1'; 1" ; 1"') selon la revendication 1, dans lequel le réceptacle (3) et les becs verseurs (4 ou 4') externes sont conçus de manière à permettre l'écoulement par gravité vers l'extérieur du réceptacle simultanément par les becs verseurs (4 ou 4') de la totalité d'un liquide contenu dans le volume intérieur (32) du réceptacle.

3. Accessoire verseur (1 ; 1'; 1"; 1"') selon la revendication 1 ou 2, dans lequel le pied (2) comporte un élément support (20) de forme allongée, et une embase (21 ; 21') à l'extrémité inférieure de l'élément support (20).

4. Accessoire verseur (1) selon la revendication 3, dans lequel l'embase (21) comporte un évidement (211) à l'aplomb de chaque bec verseur (4).

5. Accessoire verseur (1; 1'; 1"; 1"') selon l'une quelconque des revendications précédentes, dans lequel le réceptacle (3) comporte un fond (30) et une paroi latérale (31) entourant le fond (30) et délimitant avec ledit fond (30) ledit volume intérieur (32).

6. Accessoire verseur (1 ; 1' ; 1" ; 1"') selon la revendication 5, dans lequel chaque bec verseur (4) externe communique avec le volume intérieur (32) du réceptacle (3) à travers la paroi latérale (31) du réceptacle.

7. Accessoire verseur (1 ; 1' ; 1" ; 1"') selon la revendication 6, dans lequel le réceptacle (3) comporte pour chaque bec verseur (4) une ouverture d'évacuation (310) qui permet de faire communiquer le volume intérieur (32) du réceptacle (3) avec un bec verseur (4) et qui est située au niveau de la jonction entre le fond (30) et la paroi latérale (31) du réceptacle (3).

8. Accessoire verseur (1 ; 1'; 1"; 1"') selon l'une quelconque des revendications précédentes, dans lequel la face supérieure (300) du fond (30) du réceptacle (3) permet l'écoulement par gravité d'un liquide jusqu'aux becs verseurs (4).

9. Accessoire verseur (1 ; 1'; 1"; 1"') selon l'une quelconque des revendications précédentes, dans lequel le réceptacle (3) et les becs verseurs (4) sont conçus pour permettre l'écoulement par gravité en en dehors du réceptacle (3) d'une dose (F) de boisson sous forme de sous-doses (F1, F2) ayant sensiblement le même volume.

10. Accessoire verseur (1 ; 1'; 1"; 1"') selon l'une quelconque des revendications précédentes, dans lequel la sortie (41) de chaque bec verseur (4 ; 4') est positionnée à un niveau au dessous du fond (30) du réceptacle (3)

11. Accessoire verseur (1 ; 1'; 1" ; 1"') selon l'une quelconque des revendications précédentes, dans lequel l'accessoire comporte deux becs verseurs (4 ou 4') diamétralement opposés par rapport au volume intérieur (32) du réceptacle (3).

12. Accessoire verseur (1"; 1"') selon l'une quelconque des revendications précédentes, dont le pied (2) est réglable en hauteur.

13. Accessoire verseur (1; 1'; 1"; 1"') selon l'une quelconque des revendications précédentes, dans lequel le réceptacle (3) et les becs verseurs (4 ou 4') externes sont conçus de manière à permettre l'écoulement par gravité vers l'extérieur du réceptacle simultanément par les becs verseurs (4 ou 4') d'un liquide contenu dans le volume intérieur (32) du réceptacle, lorsque le pied (2) de l'accessoire verseur est posé sur un support plan (51) horizontal.

14. Machine (5) de distribution de boisson et accessoire (1 ; 1' ; 1" ; 1"') visé à l'une quelconque des revendications précédentes, ladite machine (5) comportant au moins une buse (50) de distribution d'une boisson, et l'accessoire (1 ; 1' ; 1" ; 1"') étant adapté pour être positionné de manière stable sous la buse (50) sans être fixé à la buse de distribution (50).

15. Utilisation d'une machine (5) comportant au moins une buse (50) de distribution d'une boisson, et permettant à chaque utilisation de délivrer une dose prédéfinie (F) de boisson en combinaison avec un accessoire (1; 1'; 1"; 1"') visé à l'une quelconque des revendications 1 à 13, de manière à distribuer une sous-dose de boisson (F1, F2) par bec verseur (4 ; 4') à partir de la dose (F) délivrée par la machine.

## Patentansprüche

1. Ausgießzubehör (1; 1; 1"; 1"') für einen Getränkeausgabeautomaten (5), wobei das Ausgießzubehör einen Fuß (2) aufweist, der einen Behälter (3) trägt, wobei der Behälter zumindest einen Innenraum (32) begrenzt und eine obere Öffnung (33) für das Befüllen des Innenraums des Behälters aufweist, wobei der Behälter ferner mit zumindest zwei äußeren Ausgießtüllen (4 bzw. 4') versehen ist, die mit dem Innenraum (32) des Behälters kommunizieren, und wobei der Behälter (3) und die äußeren Ausgießtüllen (4 bzw. 4') so ausgelegt sind, dass sie das Ausströmen einer in dem Innenraum (32) des Behälters enthaltenen Flüssigkeit mittels Schwerkraft nach außerhalb des Behälters über die Ausgießtüllen (4 bzw. 4') gleichzeitig gestatten.

2. Ausgießzubehör (1; 1'; 1"; 1"') nach Anspruch 1, wobei der Behälter (3) und die äußeren Ausgießtüllen (4 bzw. 4') so ausgelegt sind, dass sie das Ausströmen der Gesamtheit einer in dem Innenraum (32) des Behälters enthaltenen Flüssigkeit mittels Schwerkraft nach außerhalb des Behälters über die Ausgießtüllen (4 bzw. 4') gleichzeitig gestatten.

3. Ausgießzubehör (1; 1'; 1"; 1"') nach Anspruch 1 oder 2, wobei der Fuß (2) ein Tragelement (20) länglicher Form und eine Basis (21; 21') am unteren Ende des Tragelements (20) aufweist.

4. Ausgießzubehör (1) nach Anspruch 3, wobei die Basis (21) eine Ausnehmung (211) lotrecht zu jeder Ausgießtülle (4) aufweist.

5. Ausgießzubehör (1; 1'; 1"; 1"') nach einem der vorangehenden Ansprüche, wobei der Behälter (3) einen Boden (30) und eine Seitenwand (31) aufweist, die den Boden (30) umgibt und mit dem Boden (30) den Innenraum (32) begrenzt.

6. Ausgießzubehör (1; 1'; 1"; 1"') nach Anspruch 5, wobei jede äußere Ausgießtülle (4) mit dem Innenraum (32) des Behälters (3) durch die Seitenwand (31) des Behälters hindurch kommuniziert.

7. Ausgießzubehör (1; 1'; 1"; 1"') nach Anspruch 6, wobei der Behälter (3) für jede Ausgießtülle (4) eine Ablauföffnung (310) aufweist, die gestattet, den Innenraum (32) des Behälters (3) mit einer Ausgießtülle (4) in Kommunikation zu bringen und die im Bereich der Verbindungsstelle zwischen Boden (30) und Seitenwand (31) des Behälters (3) liegt.

8. Ausgießzubehör (1; 1'; 1"; 1"') nach einem der vorangehenden Ansprüche, wobei die Oberseite (300) des Bodens (30) des Behälters (3) das Ausströmen einer Flüssigkeit bis zu den Ausgießtüllen (4) mittels Schwerkraft gestattet.

9. Ausgießzubehör (1; 1'; 1"; 1"') nach einem der vorangehenden Ansprüche, wobei der Behälter (3) und die Ausgießtüllen (4) dazu ausgelegt sind, das Ausströmen einer Getränkeportion (F) in Form von Teilportionen (F1, F2) mit im Wesentlichen gleichem Volumen mittels Schwerkraft aus dem Behälter (3) heraus zu gestatten.

10. Ausgießzubehör (1; 1'; 1"; 1"') nach einem der vorangehenden Ansprüche, wobei der Auslass (41) jeder Ausgießtülle (4; 4') in einer Höhe unterhalb des Bodens (30) des Behälters (3) positioniert ist.

11. Ausgießzubehör (1; 1'; 1"; 1"') nach einem der vorangehenden Ansprüche, wobei das Zubehör zwei Ausgießtüllen (4 bzw. 4') aufweist, die bezüglich des Innenraums (32) des Behälters (3) diametral entgegengesetzt sind.

12. Ausgießzubehör (1"; 1"') nach einem der vorangehenden Ansprüche, wobei der Fuß (2) höhenverstellbar ist.

13. Ausgießzubehör (1; 1'; 1"; 1"') nach einem der vorangehenden Ansprüche, wobei der Behälter (3) und die äußeren Ausgießtüllen (4 bzw. 4') dazu ausgelegt sind, dass sie das Ausströmen einer in dem Innenraum (32) des Behälters enthaltenen Flüssigkeit nach außerhalb des Behälters mittels Schwerkraft über die Ausgießtüllen (4 bzw. 4') gleichzeitig dann gestatten, wenn der Fuß (2) des Ausgießzubehörs auf einen horizontal verlaufenden, ebenen Untergrund (51) gesetzt ist.

14. Getränkeausgabeautomat (5) und Zubehör (1; 1'; 1"; 1"') nach einem der vorangehenden Ansprüche, wobei der Automat (5) zumindest eine Getränkeausgabedüse (50) aufweist und das Zubehör (1; 1'; 1"; 1"') dazu geeignet ist, in stabiler Weise unter die Düse (50) positioniert zu werden, ohne an die Ausgabedüse (50) befestigt zu werden.

15. Verwendung eines Automaten (5) mit zumindest einer Getränkeausgabedüse (50), wobei es bei jeder Verwendung möglich ist, eine vordefinierte Getränkeportion (F) in Kombination mit einem Zubehör (1; 1'; 1"; 1"') nach einem der Ansprüche 1 bis 13 bereitzustellen, so dass eine Getränke-Teilportion (F1, F2) über die Ausgießtülle (4; 4') ausgehend von der durch den Automaten bereitgestellten Portion (F) ausgegeben wird.

## Claims

1. A pouring accessory (1; 1'; 1", 1"') for a beverage dispensing machine (5), said pouring accessory comprising a leg (2) supporting a container (3), said container delimiting at least one inner volume (32) and comprising an upper opening (33) for filling said inner volume of the container, said container further being provided with at least two external pouring spouts (4 or 4'), which communicate with the inner volume (32) of the container, and the container (3) and the external pouring pouts (4 or 4') being designed so as to allow the flow by gravity toward the outside of the container simultaneously through the pouring spouts (4 or 4') of a liquid contained in the inner volume (32) of the container.

2. The pouring accessory (1; 1'; 1"; 1"') according to claim 1, wherein the container (3) and the external pouring spouts (4 or 4') are designed so as to allow the flow by gravity toward the outside of the container simultaneously through the pouring spouts (4 or 4') of all of a liquid contained in the inner volume (32) of the container.

3. The pouring accessory (1; 1'; 1"; 1"') according to claim 1 or 2, wherein the leg (2) comprises a support element (20) with an elongated shape, and a base (21; 21') at the lower end of the support element (20).

4. The pouring spout (1) according to claim 3, wherein the base (21) comprises a recess (211) overhanging each pouring spout (4).

5. The pouring accessory (1; 1'; 1"; 1"') according to any one of the preceding claims, wherein the container (3) comprises a bottom (30) and a side wall (31) surrounding the bottom (30) and delimiting said inner volume (32) with said bottom (30).

6. The pouring accessory (1; 1'; 1 "; 1"') according to claim 5, wherein each external pouring spout (4) communicates with the inner volume (32) of the container (3) through the side wall (31) of the container.

7. The pouring accessory (1; 1'; 1"; 1"') according to claim 6, wherein the container (3) comprises, for each pouring spout (4), a discharge opening (310) that makes it possible to place the inner volume (32) of the container (3) in communication with a pouring spout (4) and which is situated at the junction between the bottom (30) and the side wall (31) of the container (3).

8. The pouring accessory (1; 1'; 1"; 1"') according to any one of the preceding claims, wherein the upper face (300) of the bottom (30) of the container (3) allows the gravitational flow of a liquid to the pouring spouts (4).

9. The pouring accessory (1'; 1'; 1"; 1"') according to any one of the preceding claims, wherein the container (3) and the pouring spouts (4) are designed to allow the gravitational flow outside the container (3) of a dose (F) of beverage in the form of sub-doses (F1, F2) having substantially the same volume.

10. The pouring accessory (1; 1'; 1"; 1"') according to any one of the preceding claims, wherein the outlet (41) of each pouring spout (4; 4') is positioned at a level below the bottom (30) of the container (3).

11. The pouring accessory (1; 1'; 1"; 1"') according to any one of the preceding claims, wherein the accessory comprises two diametrically opposite pouring spouts (4 or 4') relative to the inner volume (32) of the container (3).

12. The pouring accessory (1"; 1"') according to any one of the preceding claims, wherein the height of the leg (2) can be adjusted.

13. The pouring accessory (1; 1'; 1"; 1"') according to any one of the preceding claims, wherein the container (3) and the external pouring spouts (4 or 4') are designed so as to allow the gravitational flow toward the outside of the container, simultaneously through the pouring spouts (4 or 4'), of a liquid contained in the inner volume (32) of the container, when the leg (2) of the pouring accessory is placed on a horizontal planar support (51).

14. A beverage dispensing machine (5) and accessory (1; 1'; 1"; 1"') set out in any one of the preceding claims, said machine (5) comprising at least one nozzle (50) for dispensing a beverage, and the accessory (1; 1'; 1"; 1"') being suitable for being positioned stably below the nozzle (50) without being fastened to the dispensing nozzle (50).

15. A use of a machine (5) comprising at least one nozzle (50) for dispensing a beverage, and allowing, upon each use, the delivery of a predefined dose (F) of beverage in combination with an accessory (1; 1'; 1"; 1"') set out in any one of claims 1 to 13, so as to dispense one sub-dose of beverage (F1, F2) per pouring spout (4; 4') from the dose (F) dispensed by the machine.
